# DEMANDE DE BREVET EUROPEEN

(11) **EP 2 073 494 A1**
(43) Date de publication de la demande: **24.06.2009**
(21) Numéro de dépôt: 08172192.0
(22) Date de dépôt: 18.12.2008
(51) Int. Cl.: H04L 29/06, H04M 3/51

(54) **Procédé de signalisation de session de communications**

(30) Priorité: 21.12.2007 FR 0760263
(71) Demandeur: FRANCE TELECOM, 75015 Paris (FR)
(72) Inventeur: Bouille, Philippe, 22560, PLEUMEUR BODOU (FR); Collin, Guillaume, 22290, GOUDELIN (FR)
(74) Mandataire: Desormiere, Pierre-Louis

(57) **Abrégé**

La présente invention concerne un procédé de signalisation permettant la diffusion d'informations relatives à une requête d'établissement d'une session de communication, à une pluralité de terminaux locaux (T₁ ; T₂) gérés par une borne d'accès (P). Conformément à l'invention, un identifiant unique (ID) routable est préalablement alloué à la borne d'accès, cet identifiant unique (ID) étant enregistré auprès d'un serveur distant (20), pour chaque terminal local connecté à la borne d'accès, en association avec un identifiant utilisateur (U₁ ; U₂) dudit au moins un terminal local (T₁ ; T₂).

## Description

### Arrière-plan de l'invention

L'invention se situe dans le domaine de la gestion de sessions de communications sur des systèmes de communication sans fil.

L'invention concerne un procédé de signalisation de sessions de communications entre des terminaux locaux gérés par une borne d'accès et des terminaux distants accessibles via un réseau de télécommunication.

Dans le cadre de l'invention, une session de communication fera référence à un appel téléphonique ou un message instantané.

### Objet et résumé de l'invention

Les protocoles de communication synchrones (téléphonie) et asynchrones (messagerie instantanée) existants ne prévoient pas la diffusion d'un appel téléphonique ou d'un message à un ensemble d'utilisateurs localisés dans une zone géographique donnée.

En particulier, les services de téléphonie sur IP actuels ne permettent pas de diffuser un appel téléphonique de type VoIP (« Voice over IP ») ou de transmettre un message à un ensemble de terminaux clients localisés au niveau d'une borne d'accès Wi-Fi^{™} d'un réseau de communication.

Dans le cadre d'une utilisation domestique où la borne d'accès Wi-Fi^{™} est constituée par un modem-routeur sans fil d'un utilisateur abonné, il n'est pas possible de transférer un appel téléphonique entrant sur le modem-routeur à un ensemble de terminaux locaux connectés localement à ce modem routeur.

Dans le cadre d'une utilisation commerciale où la borne d'accès est un point d'accès Wi-Fi^{™} (communément appelé « Hot Spot »), il n'est pas possible de diffuser un message de publicité entrant sur le point d'accès, à un ensemble de terminaux locaux connectés localement à ce point d'accès.

A fortiori, il n'est pas non plus possible de notifier une session de communication entrante (appel téléphonique ou message de publicité) sur la borne d'accès (modem-routeur sans fil, point d'accès) à un instant donné, à au moins un nouveau terminal local entrant dans le domaine de couverture de la borne d'accès à un instant ultérieur.

La présente invention propose un procédé de signalisation entre au moins un terminal local d'un réseau local géré par une borne d'accès et au moins un terminal distant accessible via un réseau de télécommunications, le procédé de signalisation comportant les étapes consistant à :
- allouer préalablement un identifiant unique à la borne d'accès ; et
- pour au moins un terminal local, enregistrer l'identifiant unique de la borne d'accès en association avec un identifiant utilisateur du terminal local auprès d'un serveur distant.

L'allocation préalable d'un identifiant unique à la borne d'accès et le double enregistrement des terminaux locaux auprès du serveur distant permet d'adresser l'ensemble des terminaux locaux connectés à la borne d'accès. Ainsi, le procédé de signalisation selon l'invention permet avantageusement de diffuser, aux terminaux locaux qui sont doublement enregistrés auprès du serveur distant, une session de communication adressée à l'identifiant unique et entrante au niveau de la borne d'accès.

Selon une caractéristique de la présente invention, la borne d'accès envoie au serveur distant une deuxième requête d'enregistrement comprenant l'identifiant unique de la borne d'accès, lorsque la borne d'accès détecte une première requête d'enregistrement envoyée par un terminal local au serveur distant.

La borne d'accès, placée en coupure de flux entre le terminal local et le serveur distant, détecte une demande d'enregistrement émise par un terminal local et provoque en réponse à cette demande, un deuxième enregistrement du terminal local auprès du serveur distant.

A cet effet, la borne d'accès envoie au serveur distant et pour le compte du terminal local, une deuxième requête qui comprend l'identifiant unique de la borne d'accès.

De manière avantageuse, l'envoi de cette deuxième requête d'enregistrement est réalisé automatiquement par la borne d'accès et ne nécessite aucun traitement supplémentaire de la part du terminal local. Ainsi, le double enregistrement du terminal local auprès du serveur distant est rendu totalement transparent pour l'utilisateur de ce terminal.

Selon une autre caractéristique de la présente invention, le procédé de signalisation comporte en outre les étapes consistant à :
- allouer préalablement un identifiant de messagerie à la borne d'accès ;
- stocker des informations relatives à une requête d'établissement d'une session de communication adressée à l'identifiant de messagerie de la borne d'accès ; et
- sur détection d'une requête d'enregistrement émise par un terminal local, transmettre audit terminal local les informations relatives à l'établissement de la session de communication stockées.

L'identifiant de messagerie est avantageusement utilisé pour stocker des informations relatives à une requête d'établissement d'une session de communication entrante adressée à cet identifiant.

Ce mode de réalisation est particulièrement avantageux, lorsque qu'aucun terminal local n'est présent dans le domaine de couverture de la borne d'accès au moment de l'envoi de la requête d'établissement de session de communication. Dès lors que les informations relatives à cette requête d'établissement sont stockées, celles-ci peuvent être ensuite transmises à des terminaux locaux entrant dans la zone de couverture de la borne d'accès, de manière à établir automatiquement la session de communication.

De cette manière, on peut facilement diffuser à chaque instant des informations relatives à des requêtes d'établissement de sessions de communications entrantes (appels téléphoniques ou messages instantanés) sur la borne d'accès à l'ensemble des terminaux locaux qui se trouvent dans le domaine de couverture de cette borne d'accès. Ainsi, n'importe quel utilisateur d'un terminal connaissant l'identifiant unique de la borne d'accès peut diffuser facilement de telles informations à l'ensemble des terminaux locaux actifs et présents dans le domaine de portée de cette borne d'accès.

La présente invention vise également une borne d'accès placée en coupure de flux entre un réseau local comprenant au moins un terminal local et un réseau de télécommunications, cette borne d'accès étant adaptée à mettre en oeuvre les étapes du procédé de signalisation selon l'invention tel que décrit ci-dessus.

Par conséquent, les avantages particuliers de cette borne d'accès sont les mêmes que ceux associés au procédé de signalisation selon l'invention, décrit ci-avant et ne seront pas à nouveau décrits.

Conformément à la présente invention, la borne d'accès comprend :
- des moyens pour s'allouer un identifiant unique ; et
- des moyens pour enregistrer l'identifiant unique de la borne d'accès en association au moins à un identifiant utilisateur de chaque terminal local auprès d'un serveur distant.

Selon une caractéristique de la présente invention, la borne d'accès comprend :
- des moyens pour détecter une première requête d'enregistrement envoyée par un terminal local au serveur distant ; et
- des moyens pour envoyer au serveur distant, en réponse à la détection de la première requête, une deuxième requête d'enregistrement comprenant l'identifiant unique de la borne d'accès.

Selon une autre caractéristique de la présente invention, la borne d'accès comporte en outre :
- des moyens pour s'allouer un identifiant de messagerie ;
- des moyens pour stocker des informations relatives à une requête d'établissement d'une session de communication adressée à l'identifiant de messagerie de la borne d'accès ;
- des moyens pour détecter une requête d'enregistrement émise par un terminal local ; et
- des moyens pour transmettre au terminal local, lesdites informations relatives à une requête d'établissement d'une session de communication, après détection de la requête d'enregistrement.

La présente invention vise également un système de communication comprenant au moins un terminal local appartenant à un réseau local, au moins un terminal distant accessible via un réseau de télécommunications, et une borne d'accès selon la présente invention, la borne d'accès étant placée en coupure de flux entre le réseau local et le réseau de télécommunications.

Les avantages particuliers de ce système de communication sont les mêmes que ceux associés à la borne d'accès selon l'invention, décrite ci-avant.

La présente invention vise également l'utilisation du procédé de signalisation selon l'invention tel que décrit ci-dessus, pour la gestion de communications téléphoniques et en particulier pour la gestion d'appels téléphoniques de type voix sur IP selon le protocole SIP (« Session Initiation Protocol »).

De manière avantageuse, l'utilisation du procédé de signalisation selon l'invention permet de transférer des appels téléphoniques VoIP selon le protocole SIP à un ensemble de terminaux locaux connectés à la borne d'accès et/ou dès lors qu'un terminal local se connecte à la borne d'accès.

Les autres avantages particuliers de cette utilisation sont les mêmes que ceux associés au procédé de signalisation selon l'invention, décrit ci-avant.

Dans un mode particulier de réalisation, les différentes étapes du procédé de signalisation de l'invention décrites ci-avant sont déterminées par des instructions de programmes d'ordinateurs.

En conséquence, l'invention vise aussi un programme d'ordinateur sur un support d'informations, ce programme étant susceptible d'être mis en oeuvre dans la borne d'accès selon la présente invention ou plus généralement dans un ordinateur, ce programme comportant des instructions adaptées à la mise en oeuvre des étapes d'un procédé de signalisation selon l'invention tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les dessins :
- la figure 1 représente, de manière schématique, un système conforme à la présente invention dans un mode particulier de réalisation ;
- la figure 2 représente, sous forme d'organigramme, un premier exemple de scénario, dans lequel sont mises en oeuvre des étapes d'un procédé de signalisation conforme à l'invention dans un mode particulier de réalisation ;
- la figure 3 représente, sous forme d'organigramme, les étapes du procédé de signalisation selon l'invention mises en oeuvre par la borne d'accès, pour obtenir le double enregistrement d'un terminal local ;
- la figure 4 représente, sous forme d'organigramme, un deuxième exemple de scénario, dans lequel sont mises en oeuvre des étapes complémentaires d'un procédé de signalisation conforme à l'invention dans un mode particulier de réalisation ; et
- la figure 5 représente, sous forme d'organigramme, les étapes du procédé de signalisation selon l'invention mises en oeuvre par la borne d'accès, pour permettre la diffusion d'informations relatives à l'établissement d'une session de communication.

### Description détaillée d'un mode de réalisation

Un mode de réalisation de la présente invention va être maintenant décrit de manière détaillée dans le cadre de la gestion de communications téléphoniques de type VoIP.

Dans ce mode de réalisation, le protocole de signalisation utilisé est le protocole SIP (« Session Initiation Protocol »). Toutefois, on notera que d'autres protocoles de signalisation tels que H.323 ou MGCP (« Media Gateway Control Protocol ») pourront être utilisés dans le cadre de l'invention.

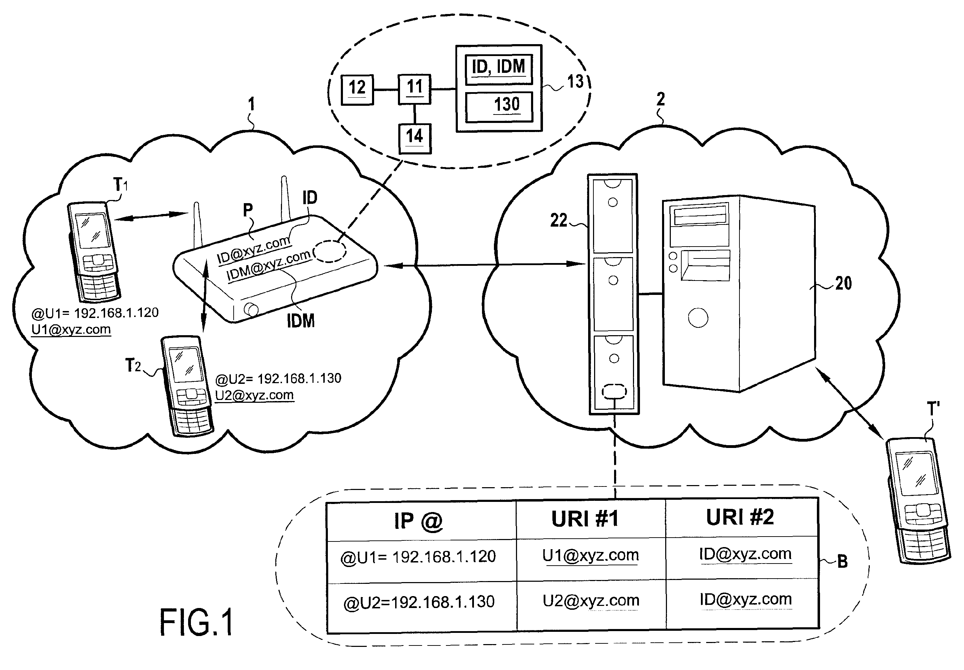

La figure 1 représente un système de communication comprenant une borne d'accès P selon l'invention placée en coupure de flux entre, d'une part, un réseau local 1 comprenant un premier terminal local T₁ et un deuxième terminal local T₂ et d'autre part, un réseau de télécommunications 2 (par exemple un réseau de type réseau IMS : « IP Multimedia Subsystem ») comprenant un terminal distant T'.

La borne d'accès P a l'architecture conventionnelle d'un ordinateur. Elle comporte notamment un processeur 11, une mémoire vive de type RAM 12 et une mémoire morte de type ROM 13.

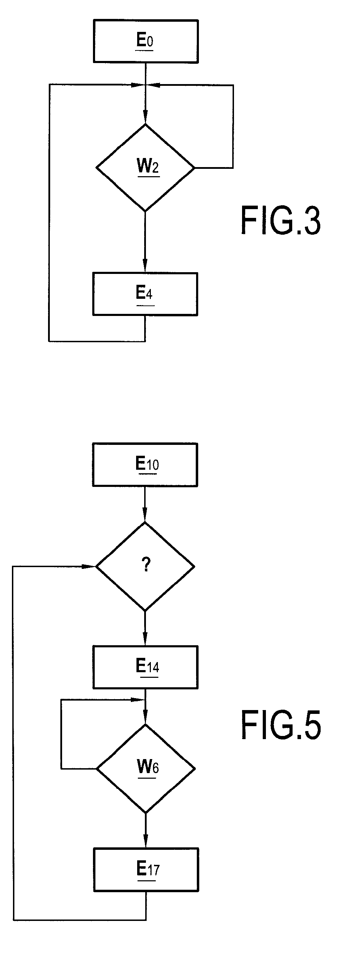

La mémoire morte 13 constitue un support d'enregistrement 13 selon l'invention, sur lequel est mémorisé un programme d'ordinateur 130 conforme à l'invention. Ce programme 130 comporte des instructions pour l'exécution des étapes du procédé de signalisation conforme à l'invention, ces étapes étant représentées sur les organigrammes des figures 3 et 5. La mémoire vive 12 est utilisée par le processeur 11 pour l'exécution du programme d'ordinateur 130 selon l'invention.

La borne d'accès P comporte aussi des moyens de communication 14 aptes à communiquer avec les terminaux locaux appartenant au réseau local 1. Dans l'exemple présent, ces moyens de communication 14 comportent une interface de communication Wi-Fi^{™} classique et une interface de communication adaptée à communiquer avec un réseau IP et/ou un réseau de type PLMN (« Public Land Mobile Network »).

Dans ce mode de réalisation, la borne d'accès P est un modem-routeur SL Wi-Fi^{™} (par exemple : Orange LiveBox^{™}), apte à gérer des sessions de communications selon le protocole SIP, entre un réseau domestique 1 (réseau local) et un réseau 2 de type IP.

Dans cet exemple, les premier T₁ et deuxième T₂ terminaux locaux ainsi que le terminal distant T' sont des téléphones portables utilisant la technologie Wi-Fi^{™}. A cet effet, ils sont équipés d'une interface de communication conforme au protocole IEEE 802.11.

Bien évidemment, l'homme du métier pourra utiliser n'importe quel autre type de terminal apte à communiquer avec le point d'accès P, tels que des PDA (« Personal Digital Assistants ») ou des ordinateurs portables.

De manière connue, les premier T₁ est deuxième T₂ terminaux locaux comportent un client SIP apte à communiquer avec un serveur SIP constitué dans cet exemple par un serveur IMS 20 sur le réseau de télécommunication 2. On suppose que les utilisateurs de ces terminaux sont abonnés à un service de téléphonie sur IP (VoIP). L'utilisateur du client SIP sur le premier terminal local T₁ (respectivement sur le deuxième terminal local T₂) est identifié par un premier identifiant utilisateur U1@xyz.com (respectivement un deuxième identifiant utilisateur U2@xyz.com) de type SIP URI ("Uniform Resource Identifier")et routable selon le protocole SIP.

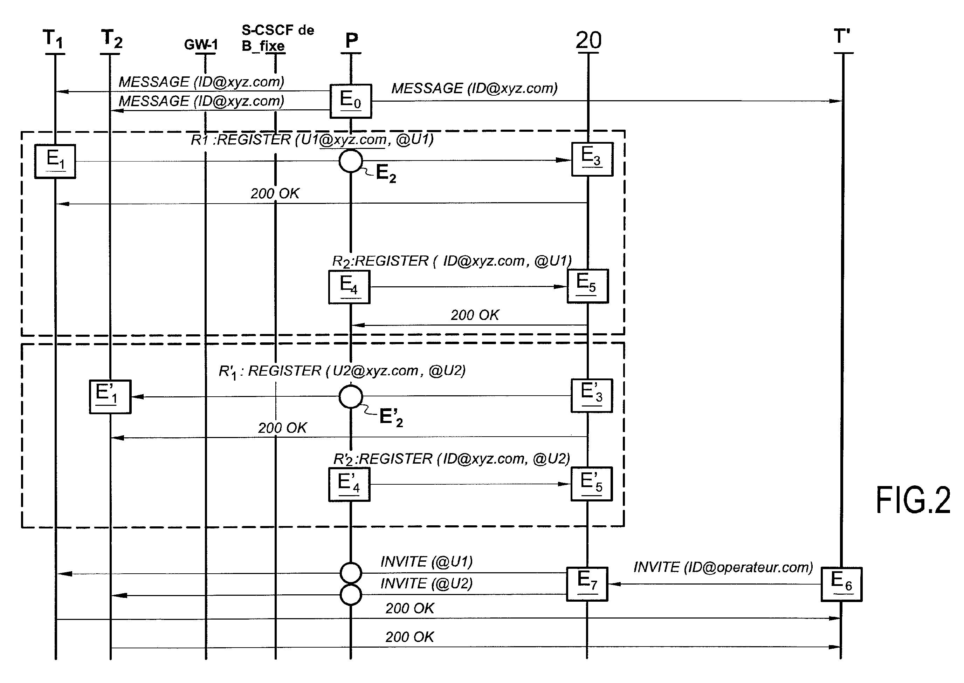

Un premier scénario de mise en oeuvre du procédé de signalisation selon la présente invention va être maintenant décrit en détail, à titre d'exemple non limitatif, en référence à la figure 2.

Lors d'une étape d'allocation préalable E₀, un identifiant unique ID est alloué à la borne d'accès P. Cet identifiant ID est un URI de type SIP, conforme au RFC 3261 (« Request For Comments ») et par conséquent routable ou adressable selon le protocole SIP. Dans l'exemple présent, l'identifiant unique ID est un URI SIP noté ID@xyz.com et stocké dans la mémoire morte 13 de la borne d'accès P.

Un administrateur de la borne d'accès P paramètre manuellement cet identifiant unique sur la borne d'accès P. A cet effet, l'administrateur pourra par exemple se connecter à un site Internet dédié où il lui sera demandé de choisir un identifiant, lequel ne lui sera définitivement attribué qu'après vérification de sa disponibilité.

Par exemple, dans le cas d'un usage domestique, la borne d'accès P est une passerelle domestique de type LiveBox^{™} et l'administrateur de cette passerelle domestique est un abonné ayant souscrit à un service d'accès à Internet (ADSL, FFTH) auprès d'un opérateur. Dans le cas d'un usage commercial, la borne d'accès est un point d'accès WiFi^{™} (Hot Spot), l'administrateur de ce point d'accès étant l'opérateur de ce point d'accès.

Dès lors que l'identifiant unique ID@xyz.com est alloué à la borne d'accès P, celui-ci est communiqué à des utilisateurs potentiellement intéressés par l'utilisation de cet identifiant. Dans l'exemple de la figure 2, l'identifiant ID@xyz.com est inséré par la borne d'accès P dans un message SIP de type MESSAGE (ID@xyz.com) qui est envoyé aux terminaux locaux T₁, T₂ et au terminal distant T'.

Dans le cas d'un usage domestique, l'identifiant unique ID est communiqué aux membres d'une même famille susceptible d'utiliser un service de diffusion mettant en oeuvre le procédé de signalisation selon la présente invention. Dans le cas d'un usage commercial, l'identifiant unique ID est communiqué à des commerçants souhaitant diffuser des annonces publicitaires via un hot spot commercial.

Dans l'exemple présent, on suppose qu'à un instant donné le premier terminal local T₁ se connecte à la borne d'accès P (par exemple, suite à la mise sous tension du terminal T₁ par son utilisateur se trouvant dans la zone de couverture de la borne d'accès P). Pour cela, le premier terminal local T₁ détecte la borne d'accès P selon le protocole IEEE 802.11, et la borne d'accès P lui attribue une adresse IP notée @U1 = 192.168.1.120.

Dans un premier temps, le premier terminal local T₁ s'enregistre auprès du serveur IMS 20 sur le réseau 2. Le serveur IMS 20 permet d'enregistrer des clients SIP selon le protocole SIP.

A cet effet, le premier terminal local T₁ envoie une première requête d'enregistrement R₁ au serveur 20, lors d'une étape d'envoi E₁.

Cette première requête d'enregistrement R₁ conforme au protocole SIP est de la forme suivante : REGISTER (Address of Record = U1@xyz.com; Contact-Address = @U1), où U1@xyz.com et @U1 désignent respectivement l'identifiant et l'adresse IP du premier terminal local T₁.

Lors d'une étape de détection E₂, la borne d'accès P, placée en coupure de flux entre le premier terminal local T₁ et le serveur 2, détecte la première requête d'enregistrement R₁ émise par le premier terminal local T₁.

Sur réception, le serveur 20 traite cette requête R₁ et réalise un premier enregistrement du premier terminal local T₁, lors d'une première étape d'enregistrement E₃, en enregistrant le premier identifiant U1@xyz.com en association avec l'adresse IP du premier terminal local T₁ dans une base de données 22, cette adresse notée @U1 étant extraite de ladite requête R₁. Le serveur IMS 20 confirme l'enregistrement auprès du premier terminal local T₁ en lui envoyant un message SIP 200 OK.

Ayant détecté la première requête d'enregistrement R₁ émise par le premier terminal local T₁, la borne d'accès P permet l'enregistrement de ce même terminal auprès du serveur IMS 20, en utilisant cette fois l'identifiant unique de la borne d'accès P.

Pour cela, la borne d'accès P envoie une deuxième requête d'enregistrement R₂ au serveur IMS 20, lors d'une deuxième étape d'envoi E₄, conformément à la présente invention. Cette deuxième requête d'enregistrement R₂ diffère de la première requête d'enregistrement R₁, en ce que l'identifiant unique de la borne d'accès ID@xyz.com remplace le premier identifiant U1@xyz.com dans le champ « Address of Record », comme indiqué ci-dessous :
R₂: REGISTER (Address of Record = ID@xyz.com; Contact-Address = @U1), où ID@xyz.com désigne l'identifiant unique de la borne d'accès P et @U1 désigne l'adresse IP du premier terminal local T₁.

Sur réception de la deuxième requête d'enregistrement R₂, le serveur IMS 20 enregistre, lors d'une deuxième étape d'enregistrement E₅, l'identifiant unique ID@xyz.com de la borne d'accès P en association avec l'adresse IP du premier terminal local T₁ dans la base de données 22, l'adresse @U1 étant extraite de ladite requête R₂. Le serveur IMS 20 confirme ce deuxième enregistrement auprès du premier terminal local T₁ en lui envoyant un message SIP 200 OK.

A ce stade, le premier terminal local T₁ est doublement enregistré auprès du serveur IMS 20. Ainsi, le premier terminal local T₁ est identifié dans la base de données 22 par l'association de son identifiant U1@xyz.com (premier identifiant utilisateur), son adresse IP (@U1) et de l'identifiant unique ID@xyz.com de la borne d'accès P, conformément à la présente invention.

On suppose qu'un deuxième terminal local T₂ entre maintenant dans le domaine de couverture de la borne d'accès P et se connecte à celle-ci. De manière connue, la borne d'accès P attribue une adresse IP @U2 = 192.168.1.130 au deuxième terminal local T₂ de sorte que ce terminal soit identifié sur le réseau local 1.

Le double enregistrement du deuxième terminal local T₂ est alors effectué comme pour le cas du premier terminal local T₁ tel que décrit précédemment. Les étapes notées E'₁, E'₂, E'₃, E'₄, E'₅ sur la figure 2 pour le double enregistrement du deuxième terminal local T₂ correspondent respectivement aux étapes E₁, E₂, E₃, E₄, E₅ déjà décrites et par conséquent elles ne seront pas à nouveau décrites.

A l'issue de la deuxième étape d'enregistrement E'₅, le deuxième terminal local T₂ est doublement enregistré auprès du serveur IMS 20. Ainsi, le deuxième terminal local T₂ est identifié dans la base de données 22 par l'association de son identifiant U2@xyz.com (deuxième identifiant utilisateur), son adresse IP (@U2) et de l'identifiant unique ID@xyz.com de la borne d'accès P, conformément à la présente invention.

A ce stade, les premier T₁ et deuxième T₂ terminaux locaux sont doublement enregistrés dans la base de données 22 auprès du serveur IMS 20, d'une part par leur identifiant utilisateur et d'autre part par l'identifiant unique de la borne d'accès, conformément à la présente invention et comme illustré sur la figure 1. L'état de la base de données 22 est représenté schématiquement par une table B dans laquelle figure pour chaque terminal local T₁, T₂, son adresse IP (respectivement @U₁, @U₂) en association avec son identifiant utilisateur (respectivement U₁@xyz.com, U₂@xyz.com) et l'identifiant unique de la borne d'accès P.

On suppose que l'utilisateur du terminal distant T' connaissant l'identifiant unique de la borne d'accès ID@xyz.com souhaite établir une conférence téléphonique avec l'ensemble des terminaux actuellement connectés à la borne d'accès P.

Pour cela, le terminal distant T' envoie au serveur IMS 20 un message d'invitation comprenant l'identifiant unique ID@xyz.com de la borne d'accès P, lors d'une étape d'envoi E₆. Le message d'invitation est conforme au protocole SIP et de la forme suivante : INVITE (Request URI = ID@xyz.com).

Sur réception du message d'invitation INVITE, le serveur IMS 20 récupère les identifiants utilisateurs associés à l'identifiant de la borne d'accès P dans la base de données 22.

On suppose que l'état de la table B est le même que décrit en référence à la figure 1.

Ainsi, le serveur IMS 20 récupère les premier Ul@xyz.com et deuxième U2@xyz.com identifiants utilisateur associés à l'identifiant unique ID@xyz.com de la borne d'accès P. Le serveur IMS 20 remplace alors les URI SIP par les adresses IP correspondantes qui ont été transmises audit serveur lors des étapes d'enregistrements, ce qui provoque une transmission du message d'invitation INVITE aux premier T₁ et deuxième T₂ terminaux via la borne d'accès P, lors d'une étape d'envoi E₇.

Sur réception du message d'invitation INVITE, les premier T₁ et deuxième T₂ terminaux locaux envoient un message SIP 200 OK au terminal T', lequel leur répondra à chaque terminal un message de confirmation ACK non-représenté sur la présente figure.

Une session de communication de conférence téléphonique entre les terminaux locaux T₁, T₂ et le terminal distant T aura ainsi été établie par le serveur IMS 20 par remplacement des URI et gestion en parallèle du processus d'invitation des terminaux T1 et T2..

La figure 3 décrit sous forme d'organigramme, les étapes du procédé selon l'invention mises en oeuvre par la borne d'accès P, permettant d'obtenir le double enregistrement d'un terminal local.

Lors de l'étape initiale d'allocation E₀ déjà décrite ci-dessus, la borne d'accès P enregistre l'identifiant unique ID@xyz.com qui lui est attribué, dans une mémoire locale (par exemple, dans un disque dur intégré à la borne d'accès).

Lors d'une étape de test W₂, la borne d'accès P vérifie si une requête d'enregistrement REGISTER (première requête d'enregistrement R₁) a été émise par un terminal local.

Dès que la borne d'accès P détecte une première requête d'enregistrement R₁ à destination du serveur IMS 20 lors de l'étape de détection E₂ déjà décrite, celle-ci effectue les étapes suivantes :
- extraction de l'adresse IP du terminal local ayant émis la première requête d'enregistrement, cette adresse étant comprise dans ladite requête ;
- génération de la deuxième requête d'enregistrement R₂ comprenant l'identifiant unique ID@xyz.com de la borne d'accès P et l'adresse IP extraite de la première requête d'enregistrement R₁ ; et
- envoi de la deuxième requête d'enregistrement R₂ lors de l'étape d'envoi E₄ déjà décrite ci-avant.

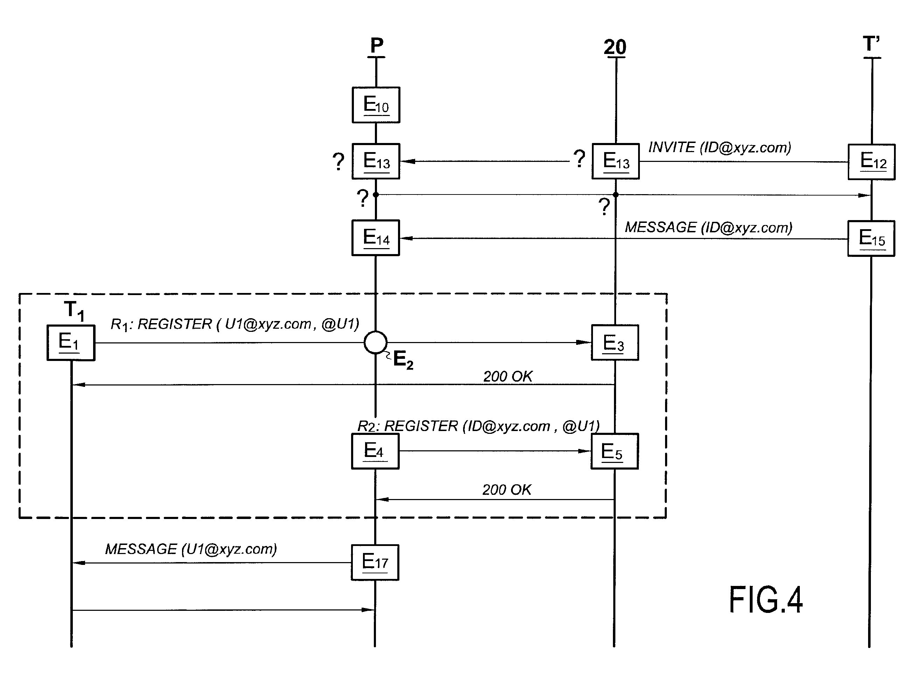

Les étapes du procédé décrites en référence à la figure 4 sont mises en oeuvre par des moyens logiciels exécutées par une unité de traitement (processeur 11) de la borne d'accès P.

Le procédé de signalisation selon la présente invention va être maintenant décrit en détail en référence aux figures 4 et 5, dans le cadre d'un scénario donné à titre d'exemple non limitatif, dans lequel un message est déposé sur la borne d'accès P en cas de non réponse à un appel entrant niveau de la borne d'accès P.

Lors d'une étape d'allocation préalable E₁₀, un identifiant de messagerie est alloué à la borne d'accès P.

Cet identifiant est routable ou adressable par le protocole SIP, et de type SIP URI (« Uniform Resource Identifier ») conformément au RFC 3261 (« Request For Comments »). Dans l'exemple présent, l'identifiant de messagerie est un URI SIP noté IDM@xyz.com.

Lors d'une étape de réception E₁₃, le serveur IMS 20 reçoit une requête d'établissement de session de communication entrante adressée à la borne d'accès P et émise par un terminal distant T'.

Etant donné que le serveur IMS 20 connaît l'état d'enregistrement des terminaux locaux enregistrés auprès de la borne d'accès P, il peut transmettre automatiquement cette requête via la borne d'accès, à l'ensemble des terminaux locaux enregistrés avec l'identifiant unique de la borne d'accès P.

A titre d'exemple, la session de communication entrante est un appel téléphonique de type VoIP. Dans ce cas, la requête de session de communication entrante est une requête de type INVITE (Request URI = ID@xyz.com) selon le protocole SIP.

On suppose qu'au moment où la borne d'accès P reçoit la requête, aucun terminal local n'est présent dans le domaine de portée de la borne d'accès P, et que par conséquent, la requête ne peut être reçue par aucun terminal local associé à la borne d'accès P.

Le serveur IMS 20 envoie alors un message au terminal distant T' l'informant que l'initiation de l'appel téléphonique a échoué. Le serveur IMS pourra en outre proposer à

L'utilisateur du terminal distant T' dépose auprès de la borne d'accès P un message instantané comprenant par exemple un message textuel et/ou vocal. Pour cela, le terminal distant T' envoie à la borne d'accès P un message de type SIP MESSAGE (IDM@xyz.com) en utilisant l'adresse de messagerie IDM@xyz.com préalablement allouée à la borne d'accès P.

Sur réception du message MESSAGE (IDM@xyz.com) émis par le terminal distant T', la borne d'accès P sauvegarde ce message dans une mémoire interne, lors d'une étape de sauvegarde E₁₄.

Ce message constitue des informations relatives à une requête d'établissement d'une session de communication au sens de l'invention, cette requête étant adressée à l'identifiant de messagerie IDM@xyz.com de la borne d'accès P. De telles informations sont constituées au moins par un contenu vocal ou textuel généré par le terminal distant T' et l'identifiant SIP de ce terminal distant T'. De manière optionnelle, ces informations comprennent en outre la date et l'heure auxquelles l'appel téléphonique a été reçu.

On suppose qu'au bout d'un certain temps, un terminal local (dit terminal local entrant) devient actif dans le domaine de couverture de la borne locale d'accès. C'est par exemple le cas lorsque le terminal local pénètre dans le domaine de couverture (ou domaine de portée) de la borne d'accès.

On suppose que le premier terminal local T₁ entre dans le domaine de couverture de la borne d'accès P. Ensuite, on procède à un double enregistrement du premier terminal local T₁ auprès du serveur IMS 20, lors des étapes E₁, E₂, E₃, E₄, E₅ déjà décrites en référence à la figure 2.

Sur détection de la première requête d'enregistrement R₁ (déjà décrite) émise par le terminal local entrant T₁, la borne d'accès P transmet les informations relatives à une requête d'établissement d'une session de communication préalablement sauvegardées. Dans l'exemple présent, ces informations sont transmises lors d'une étape d'envoi E₁₇, au premier terminal local entrant T₁ par la borne d'accès P dans un message de type MESSAGE (U1@xyz.com) conforme au protocole SIP.

## Revendications

1. Procédé de signalisation entre au moins un terminal local (T₁, T₂) d'un réseau local (1) géré par une borne d'accès (P) et au moins un terminal distant (T') accessible via un réseau de télécommunications (2), ledit procédé étant **caractérisé en ce qu'**il comporte les étapes consistant à :
■ allouer préalablement (E₀) un identifiant unique (ID) à la borne d'accès (P) ;
■ pour au moins un terminal local (T₁; T₂), enregistrer (E₄, E₅ ; E'₄, E'₅) l'identifiant unique (ID) de la borne d'accès (P) en association avec un identifiant utilisateur (U₁; U₂) dudit au moins un terminal local (T₁; T₂) auprès d'un serveur distant (20) ;
■ allouer préalablement (E₁₀) un identifiant de messagerie (IDM) à la borne d'accès (P) ;
■ stocker (E₁₄) des informations relatives à une requête d'établissement d'une session de communication adressée à l'identifiant de messagerie (IDM) de la borne d'accès (P) ; et
■ sur détection (E₂) d'une requête d'enregistrement (R₁) émise par un terminal local (T₁), transmettre (E₁₇) lesdites informations relatives à la requête d'établissement audit terminal local (T₁).

2. Procédé selon la revendication 1, **caractérisé en ce que,** sur détection (E₂; E'₂) d'une première requête d'enregistrement (R₁) envoyée par un terminal local (T₁; T₂) au serveur distant (20), la borne d'accès (P) envoie audit serveur distant (20) une deuxième requête d'enregistrement (R₂) comprenant l'identifiant unique (ID) de la borne d'accès (P).

3. Borne d'accès (P) placée en coupure de flux entre un réseau local (1) comprenant au moins un terminal local (T₁; T₂) et un réseau de télécommunications (2), ladite borne d'accès (P) étant **caractérisée en ce qu'**elle comprend :
■ des moyens (11, 13) pour s'allouer (E₀) un identifiant unique (ID);
■ des moyens (13) pour enregistrer (E₄, E₅ ; E'₄, E'₅) l'identifiant unique (ID) de la borne d'accès (P) en association au moins à un identifiant utilisateur (U₁; U₂) de chaque terminal local (T₁; T₂) auprès d'un serveur distant (20) ;
■ des moyens (11, 13) pour s'allouer un identifiant de messagerie (IDM);
■ des moyens (13) pour stocker des informations relatives à une requête d'établissement d'une session de communication adressée à l'identifiant de messagerie de la borne d'accès ;
■ des moyens (11, 14) pour détecter une requête d'enregistrement (R₁) émise par un terminal local (T₁); et
■ des moyens (11, 14) pour transmettre audit terminal local (T₁) lesdites informations relatives à une requête d'établissement d'une session de communication, après détection de ladite requête d'enregistrement (R₁).

4. Borne d'accès (P) selon la revendication 3, **caractérisé en ce qu'**elle comprend :
■ des moyens pour détecter (E₂; E'₂) une première requête d'enregistrement (R₁) envoyée par un terminal local (T₁; T₂) au serveur distant (20) ; et
■ des moyens pour envoyer audit serveur distant (20), en réponse à la détection de la première requête d'enregistrement (R₁), une deuxième requête d'enregistrement (R₂) comprenant l'identifiant unique (ID) de la borne d'accès (P).

5. Système de communication comprenant au moins un terminal local (T₁; T₂) appartenant à un réseau local (1) et au moins un terminal distant (T') accessible via un réseau de télécommunications (2), ledit système étant **caractérisé en ce qu'**il comprend en outre une borne d'accès (P) selon la revendication 3 ou 4, ladite borne d'accès (P) étant placée en coupure de flux entre le réseau local (1) et le réseau de télécommunications (2).

6. Utilisation du procédé de signalisation selon la revendication 1 ou 2, pour la gestion de communications téléphoniques.

7. Programme d'ordinateur (130) destiné à être exécuté par un processeur (11) d'une borne d'accès (P) selon la revendication 3 ou 4, ledit programme comportant des instructions pour l'exécution des étapes du procédé de signalisation selon la revendication 1 ou 2.

8. Support d'enregistrement (13) lisible par un ordinateur sur lequel est enregistré le programme d'ordinateur (130) selon la revendication 7.
